# EUROPÄISCHE PATENTANMELDUNG

(11) **EP 4 729 200 A1**
(43) Veröffentlichungstag der Anmeldung: **22.04.2026**
(21) Anmeldenummer: 25208485.0
(22) Anmeldetag: 14.10.2025
(51) Int. Cl.: B21D 28/10, B21D 43/02

(54) **MASCHINELLE VORRICHTUNG MIT EINER HORIZONTIERUNGSVORRICHTUNG ZUM AUSRICHTEN EINES PRODUKTVERBUNDS EINES WERKSTÜCKTEILS UND EINES RESTGITTERS EINER TRENNENDEN WERKSTÜCKBEARBEITUNG VOR DEM SEPARIEREN DES WERKSTÜCKTEILS**

(30) Priorität: 21.10.2024 DE 102024130463
(71) Anmelder: TRUMPF Werkzeugmaschinen SE + Co. KG, 71254 Ditzingen (DE)
(72) Erfinder: Mach, Patrick, 71404 Korb (DE); Krause, Stefan, 06281 Wilthen (DE); Müller, Ralf, 01796 Dohma (DE); Waurisch, Falk, 01877 Schmölln-Putzkau (DE)
(74) Vertreter: Trumpf Patentabteilung

(57) **Zusammenfassung**

Eine maschinelle Vorrichtung (1) zum Separieren eines als Bearbeitungsprodukt einer trennenden Bearbeitung eines plattenartigen Werkstücks, insbesondere eines Blechs, vorliegenden Werkstückteils (2) von einem als weiteres Bearbeitungsprodukt der trennenden Werkstückbearbeitung vorliegenden Restgitter (3) unter Schwerkraftwirkung aus einem Produktverbund (5) des Restgitters (3) und des Werkstückteils (2) weist eine Haltevorrichtung (7), eine Separiereinheit (13) und eine Produktablage (15) auf. Die Haltevorrichtung (7) ist ausgebildet zum in der Schwerkraftrichtung wirksamen Fixieren des Produktverbunds (5) vor dem Separieren des Werkstückteils (2) und zum in der Schwerkraftrichtung wirksamen Fixieren des Restgitters (3) nach dem Separieren des Werkstückteils (2). Mittels einer Horizontierungsvorrichtung (18) wird vor dem Lösen des Werkstückteils (2) aus dem mittels der Haltevorrichtung (7) fixierten Produktverbund (5) der Produktverbund (5) mit einer Hauptebene (10) des Produktverbunds (5) parallel zu einer horizontalen Ablagefläche (14) der mit einem vertikalen Abstand unterhalb des Produktverbunds (5) angeordneten Produktablage (15) ausgerichtet.

## Beschreibung

Die Erfindung betrifft eine maschinelle Vorrichtung zum Separieren eines als Bearbeitungsprodukt einer trennenden Bearbeitung eines plattenartigen Werkstücks, insbesondere eines Blechs, vorliegenden Werkstückteils von einem als weiteres Bearbeitungsprodukt der trennenden Werkstückbearbeitung vorliegenden Restgitter unter Schwerkraftwirkung aus einem Produktverbund des Restgitters und des Werkstückteils,
- wobei die maschinelle Vorrichtung eine Haltevorrichtung, eine Separiereinheit und eine Produktablage aufweist,
- wobei die Haltevorrichtung ausgebildet ist zum in der Schwerkraftrichtung wirksamen Fixieren des Produktverbunds vor dem Separieren des Werkstückteils und zum in der Schwerkraftrichtung wirksamen Fixieren des Restgitters nach dem Separieren des Werkstückteils,
- wobei die Separiereinheit ausgebildet ist zum Lösen des Werkstückteils aus dem mittels der Haltevorrichtung fixierten Produktverbund,
- wobei die Produktablage mit einem vertikalen Abstand unterhalb des mittels der Haltevorrichtung fixierten Produktverbunds angeordnet ist und
- wobei die Produktablage zur Ablage des aus dem Produktverbund gelösten Werkstückteils unter Schwerkraftwirkung eine horizontale Ablagefläche aufweist, die sich entlang des mittels der Haltevorrichtung fixierten Produktverbunds erstreckt.

Bei der trennenden Blechbearbeitung mittels einer Trennvorrichtung, beispielsweise mittels einer Laser-Trennvorrichtung, fallen als Bearbeitungsprodukte Blechteile und ein die Blechteile wenigstens teilweise umschließendes Restgitter an. Zur Vereinfachung des Abtransports der Bearbeitungsprodukte von der Trennvorrichtung werden die Blechteile bei der trennenden Blechbearbeitung nicht vollständig von dem Restgitter getrennt. Zwischen dem Restgitter und den Blechteilen werden vielmehr Microjoints oder Nanojoints belassen, die es ermöglichen, das Restgitter und die Blechteile beim Entladen der Trennvorrichtung als Einheit zu handhaben. Außerdem ist es denkbar, dass bei der trennenden Blechbearbeitung erzeugte Blechteile aufgrund auftretender thermischer Spannungen oder infolge eines Verkantens nach dem Trennvorgang in dem Restgitter gehalten werden. Die Separierung der Blechteile von dem Restgitter erfolgt in einem sich an die trennende Blechbearbeitung anschließenden Verfahrensschritt.

Gattungsgemäßer Stand der Technik ist offenbart in JP 2000094057 A. Der Stand der Technik betrifft eine maschinelle Anordnung und ein Verfahren zur stanzenden Blechbearbeitung. An einer Stanzstation der maschinellen Anordnung werden aus einer Blechtafel Blechteile und ein Restgitter erzeugt, wobei die Blechteile nach Abschluss der stanzenden Blechbearbeitung mit dem Restgitter über Microjoints verbunden sind. Der Verbund aus dem Restgitter und den daran angebundenen Blechteilen wird zu einer Separierstation bewegt, an der mehrere Rollenpaare in einer Bewegungsrichtung des Restgitters und der Blechteile aufeinanderfolgen und dabei senkrecht zu der Bewegungsrichtung des Restgitters und der Blechteile abwechselnd nach oben und nach unten gegeneinander versetzt sind. Zwischen den Rollen jedes Rollenpaares ist ein Spalt ausgebildet. Von der Stanzstation kommend durchläuft das Restgitter mit den Blechteilen den Spalt an mehreren in der Bewegungsrichtung aufeinanderfolgenden Rollenpaaren. Aufgrund des gegenseitigen Versatzes der Rollenpaare wird das Restgitter mit den Blechteilen beim Durchlaufen der Rollenpaare mehrfach gebogen. Gleichzeitig wird das Restgitter mit den Blechteilen in Vibration senkrecht zu der Bewegungsrichtung versetzt. Infolgedessen brechen die bei der stanzenden Blechbearbeitung zwischen dem Restgitter und den Blechteilen verbliebenen Microjoints, und die von dem Restgitter gelösten Blechteile fallen auf einen unterhalb der Rollenpaare der Separierstation angeordneten horizontalen Ablagetisch.

Die Aufgabe der vorliegenden Erfindung besteht darin, eine maschinelle Vorrichtung zum Separieren von Werkstückteilen von einem Restgitter einer trennenden Werkstückbearbeitung bereitzustellen, an der von dem Restgitter separierte Werkstückteile unter Schwerkraftwirkung geordnet und schonend auf einer Produktablage der maschinellen Vorrichtung abgelegt werden.

Erfindungsgemäß gelöst wird diese Aufgabe durch die maschinelle Vorrichtung gemäß Patentanspruch 1.

Die im Falle der Erfindung vorgesehene Horizontierungsvorrichtung sorgt dafür, dass der Produktverbund und somit auch das aus dem Produktverbund zu lösende Werkstückteil beim Lösen des Werkstückteils aus dem Produktverbund horizontal und folglich parallel zu der zur Ablage des Werkstückteils vorgesehenen Ablagefläche der Produktablage ausgerichtet ist. Insbesondere bei einer geringen Fallhöhe des Werkstückteils behält das Werkstückteil nach dem Lösen aus dem Produktverbund eine Ausrichtung parallel zu der Ablagefläche bis zur Ablage auf der Produktablage zumindest im Wesentlichen bei. Bei seinem Auftreffen auf der Ablagefläche der Produktablage ist das Werkstückteil allenfalls geringfügig gegen die Ablagefläche der Produktablage geneigt. Eine geordnete und schonende Ablage des Werkstückteils auf der Ablagefläche der Produktablage ist folglich sichergestellt. Eine geordnete Ablage und eine damit verbundene definierte Positionierung des Werkstückteils auf der Produktablage ist insbesondere in Fällen von Vorteil, in denen die Produktablage beispielsweise mittels eines Roboters automatisiert entladen wird. Eine schonende Behandlung des Werkstückteils bei der Ablage auf der Ablagefläche der Produktablage empfiehlt sich vor allem im Falle von Werkstückteilen, die beispielsweise materialbedingt oder aufgrund ihrer Geometrie für eine Beschädigung anfällig sind.

Besondere Ausführungsarten der erfindungsgemäßen maschinellen Anordnung gemäß Patentanspruch 1 ergeben sich aus den abhängigen Patentansprüchen 2 bis 12.

Ausweislich Patentanspruch 2 weist die erfindungsgemäße Horizontierungsvorrichtung eine Prüfvorrichtung und eine Justiervorrichtung auf. Mittels der Prüfvorrichtung wird vor dem Separieren des Werkstückteils von dem Restgitter geprüft, ob der mittels der Haltevorrichtung fixierte Produktverbund mit dem aus dem Produktverbund zu lösenden Werkstückteil horizontal und damit parallel zu der Ablagefläche der Produktablage ausgerichtet ist. Ist dies nicht der Fall, wird die Ausrichtung des mittels der Haltevorrichtung fixierten Produktverbunds mittels der erfindungsgemäßen Justiervorrichtung korrigiert.

Die erfindungsgemäße Prüfvorrichtung kann eine Messeinheit umfassen, mittels derer an wenigstens drei Punkten des Produktverbunds der vertikale Abstand des Produktverbunds von der horizontalen Bezugsebene bestimmt wird. Wird dabei eine nicht-horizontale Ausrichtung des Produktverbunds festgestellt, so kann eine gesteuerte Stellvorrichtung der Justiervorrichtung die Fehlausrichtung des Produktverbunds korrigieren.

Im Falle der erfindungsgemäßen maschinellen Vorrichtung gemäß Patentanspruch 3 spiegelt die Ausrichtung der zur Fixierung des Produktverbunds vorgesehenen Haltevorrichtung gegenüber der horizontalen Bezugsebene die Ausrichtung des Produktverbunds gegenüber der horizontalen Bezugsebene wider. Dementsprechend ist die Prüfvorrichtung der erfindungsgemäßen Horizontierungsvorrichtung ausgebildet zur Bestimmung der Ausrichtung der Haltevorrichtung gegenüber der horizontalen Bezugsebene. Wird mittels der Prüfvorrichtung eine von der horizontalen Soll-Ausrichtung abweichende Ist-Ausrichtung der Haltevorrichtung festgestellt, so wird mittels der Justiervorrichtung der erfindungsgemäßen Horizontierungsvorrichtung die Ausrichtung der Haltevorrichtung entsprechend geändert.

Patentanspruch 4 betrifft eine Bauart der erfindungsgemäßen maschinellen Vorrichtung nach Patentanspruch 3, im Falle derer für die zur Fixierung des Produktverbunds dienende Haltevorrichtung eine Tragstruktur vorgesehen ist, an welcher die Haltevorrichtung über wenigstens einen in vertikaler Richtung zwischen der Tragstruktur und der Haltevorrichtung angeordneten Abstandhalter in vertikaler Richtung gelagert ist. Der Abstandhalter bildet einen Teil der Justiervorrichtung der erfindungsgemäßen Horizontierungsvorrichtung. Mittels einer Stellvorrichtung der Justiervorrichtung kann die vertikale Abmessung des Abstandhalters verändert werden. Von der Stellvorrichtung wird in Fällen Gebrauch gemacht, in denen mittels der erfindungsgemäßen Prüfvorrichtung eine nicht-horizontale Ausrichtung der Haltevorrichtung und somit auch eine nicht-horizontale Ausrichtung des mittels der Haltevorrichtung fixierten Produktverbunds festgestellt wird. In derartigen Fällen wird die vertikale Abmessung des zwischen der Tragstruktur und der Haltevorrichtung angeordneten Abstandhalters mittels der Stellvorrichtung der Justiervorrichtung derart eingestellt, dass die Haltevorrichtung und der daran fixierte Produktverbund horizontal ausgerichtet sind. Durch entsprechende Einstellung der vertikalen Abmessung des oder der zwischen der Tragstruktur und der Haltevorrichtung angeordneten Abstandhalter kann auch der vertikale Abstand des an der Haltevorrichtung fixierten Produktverbunds von der Produktablage und somit die Fallhöhe des von dem Restgitter separierten Werkstückteils eingestellt werden.

Gemäß Patentanspruch 5 umfasst die Justiervorrichtung der erfindungsgemäßen Horizontierungsvorrichtung in Weiterbildung der Erfindung mehrere in vertikaler Richtung zwischen der Tragstruktur und der Haltevorrichtung vorgesehene Abstandhalter, die parallel zu der Hauptebene des mittels der Haltevorrichtung fixierten Produktverbunds gegeneinander versetzt sind und deren vertikale Abmessung eingestellt werden kann. Für den Fall, dass die mittels der Prüfvorrichtung der erfindungsgemäßen Horizontierungsvorrichtung bestimmte Ausrichtung der Haltevorrichtung von der Ausrichtung der horizontalen Bezugsebene abweicht, besteht die Möglichkeit, die vertikalen Abmessungen der Abstandhalter zwischen der Tragstruktur und der Haltevorrichtung mittels der Stellvorrichtung der Justiervorrichtung derart aufeinander abgestimmt einzustellen, dass sich die Haltevorrichtung parallel zu der horizontalen Bezugsebene erstreckt.

Im Falle der Erfindungsbauart gemäß Patentanspruch 6 wird die Tragstruktur als Bezugssystem für die Prüfung und erforderlichenfalls für die Einstellung einer horizontalen Ausrichtung des mittels der Haltevorrichtung fixierten Produktverbunds genutzt.

Mit wenigstens einem Druckluftbalg mit verstellbarem Innendruck und mit wenigstens einem Federelement mit einstellbarer Federhärte betreffen die Patentansprüche 7 und 8 erfindungsgemäß bevorzugte Bauarten des oder der zwischen der Tragstruktur und der Haltevorrichtung angeordneten Abstandhalter mit einstellbarer vertikaler Abmessung.

Gemäß Patentanspruch 9 ist in bevorzugter Weiterbildung der erfindungsgemäßen maschinellen Vorrichtung vorgesehen, dass die Separiereinheit der maschinellen Vorrichtung einen Schwingungserzeuger aufweist, der ausgebildet ist zur Erzeugung von vertikalen Schwingungen der den Produktverbund fixierenden Haltevorrichtung, welche das Lösen des Werkstückteils aus dem Produktverbund bewirken. Eine zwischen der Haltevorrichtung und der Tragstruktur angeordnete und zur Schwingungsisolierung der Haltevorrichtung gegenüber der Tragstruktur vorgesehene Feder-Dämpfer-Vorrichtung bildet dabei gleichzeitig einen Abstandhalter der vorstehend genannten Art aus, dessen vertikale Abmessung erforderlichenfalls zur horizontalen Sollausrichtung des mittels der Haltevorrichtung fixierten Produktverbunds entsprechend eingestellt werden kann.

Als Feder-Dämpfer-Vorrichtungen mit einer derartigen Doppelfunktion sehen die Patentansprüche 10 und 11 den oder die Druckluftbälge gemäß Patentanspruch 7 und das oder die Federelemente gemäß Patentanspruch 8 vor.

Patentanspruch 12 betrifft eine Bauart der erfindungsgemäßen maschinellen Vorrichtung, im Falle derer Halteorgane zur Fixierung des Produktverbunds an der Haltevorrichtung vorgesehen und an einer Basisstruktur der Haltevorrichtung parallel zu der Hauptebene des an der Haltevorrichtung fixierten Produktverbunds relativ zu der Basisstruktur zustellbar sind. Durch entsprechendes Zustellen der Halteorgane kann die Haltevorrichtung insbesondere an wechselnde Formate des an der Haltevorrichtung zu fixierenden Produktverbunds angepasst werden. Als Folge einer Umpositionierung der Halteorgane und einer damit verbundenen Veränderung der Position des Produktverbunds an der Haltevorrichtung kann die Hauptebene des an der Haltevorrichtung fixierten Produktverbunds aus einer bei einer vorausgegangenen Positionierung der Halteorgane horizontalen Ausrichtung ausgelenkt sein. Durch eine entsprechende Änderung der vertikalen Abmessung des oder der zwischen der Haltevorrichtung und der Tragstruktur angeordneten Abstandhalter mittels der Stellvorrichtung der erfindungsgemäßen Justiervorrichtung kann in diesem Fall die Schrägstellung der Hauptebene des mittels der umpositionierten Halteorgane fixierten Produktverbunds korrigiert werden.

Vorzugsweise sind der oder die Abstandhalter der Justiervorrichtung zwischen der Tragstruktur und der Basisstruktur der Haltevorrichtung vorgesehen.

Bei Einsatz einer Separiereinheit mit Schwingungserzeuger wird die Haltevorrichtung vorzugsweise an Ihrer Basisstruktur zur Ausführung von vertikalen Schwingungen angeregt, welche das Lösen des Werkstückteils aus dem Produktverbund bewirken.

Nachfolgend wird die Erfindung anhand beispielhafter schematischer Darstellungen näher erläutert. Es zeigen:
- Figur 1: eine maschinelle Vorrichtung zum Separieren von Blechteilen von einem Restgitter einer trennenden Blechbearbeitung mit einem horizontal ausgerichteten ersten Produktverbund der Blechteile und des Restgitters,
- Figur 2: die maschinelle Vorrichtung gemäß Figur 1 mit einem gegen die Horizontale geneigten zweiten Produktverbund von Blechteilen und einem Restgitter und
- Figur 3: die Anordnung gemäß Figur 2 mit dem horizontal ausgerichteten zweiten Produktverbund.

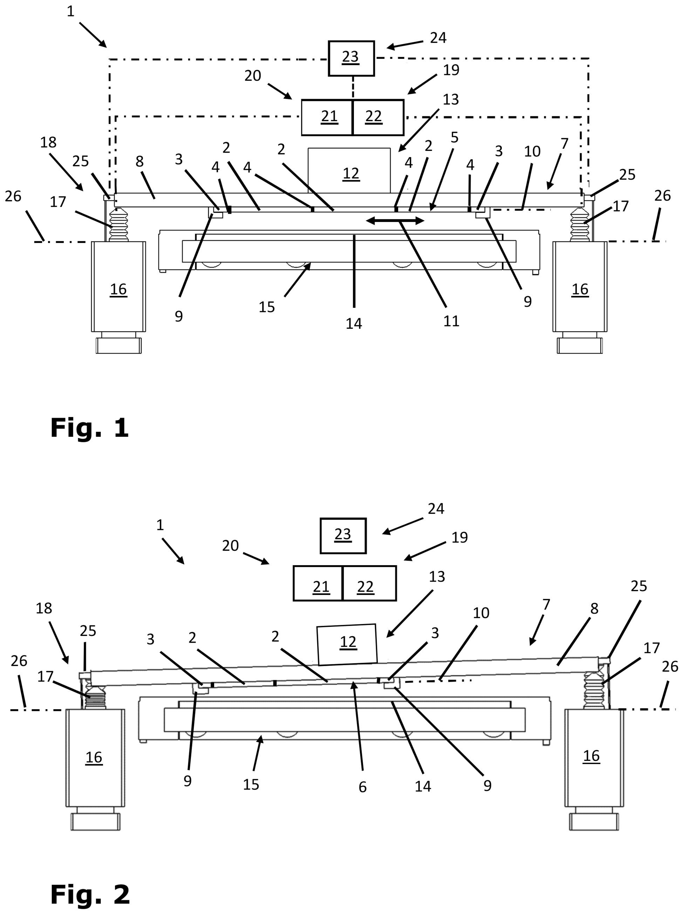

Die Figuren 1 bis 3 zeigen eine maschinelle Vorrichtung 1 zum Separieren von Werkstückteilen in Form von Blechteilen 2 von einem Restgitter 3. Bei den Blechteilen 2 und dem Restgitter 3 handelt es sich um Bearbeitungsprodukte einer trennenden Blechbearbeitung mittels einer abseits der maschinellen Vorrichtung 1 angeordneten und in den Figuren nicht dargestellten Laser-Schneidmaschine.

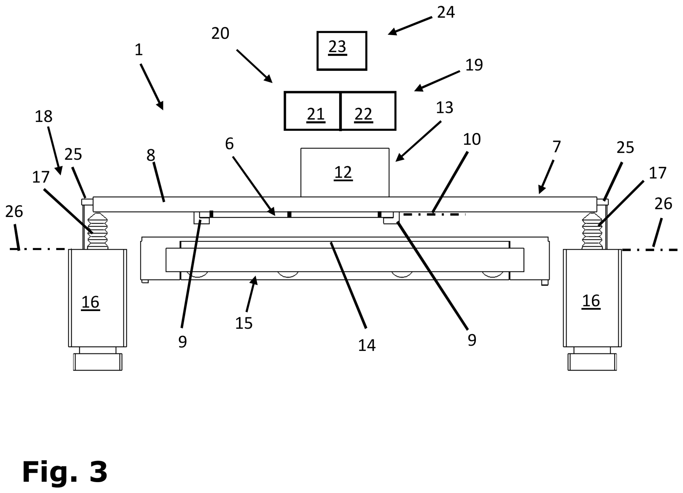

Bei der trennenden Bearbeitung mittels der Laser-Schneidmaschine wurden zwischen den Blechteilen 2 und dem Restgitter 3 sowie zwischen einander benachbarten Blechteilen 2 Nanojoints 4 belassen. Aufgrund der Nanojoints 4 bilden die Blechteile 2 und das Restgitter 3 in Figur 1 einen Produktverbund 5 und in den Figuren 2 und 3 einen Produktverbund 6 aus. Sowohl der Produktverbund 5 als auch der Produktverbund 6 wurde als Einheit von der Laser-Schneidmaschine abgeführt und zu der maschinellen Vorrichtung 1 transferiert.

Für den Produktverbund 5 und den Produktverbund 6 weist die maschinelle Anordnung 1 eine Haltevorrichtung 7 mit einer starren Grundplatte 8 als Basisstruktur und mit Halteorganen in Form von Greifern 9 auf.

An den Greifern 9 sind der Produktverbund 5 und der Produktverbund 6 in der Schwerkraftrichtung wirksam an der Haltevorrichtung 7 fixiert. Die Greifer 9 sind an der Grundplatte 8 angebracht und liegen mit einem gegenseitigen Abstand parallel zu einer strichpunktiert angedeuteten Hauptebene 10 des an der Haltevorrichtung 7 fixierten Produktverbunds 5, 6 einander gegenüber. Zur Anpassung an die voneinander verschiedenen Formate des Produktverbunds 5, 6 können die Greifer 9 parallel zu der Hauptebene 10 des an der Haltevorrichtung 7 fixierten Produktverbunds 5, 6 relativ zueinander und relativ zu der Grundplatte 8 in Richtung eines Doppelpfeils 11 zugestellt werden.

Auf der Oberseite der Grundplatte 8 der Haltevorrichtung 7 ist ein Schwingungserzeuger 12, in dem dargestellten Beispielsfall ein Unwuchterreger, angebracht, der gemeinsam mit der Haltevorrichtung 7 eine Separiereinheit 13 der maschinellen Anordnung 1 ausbildet. Mittels des Schwingungserzeugers 12 wird die Haltevorrichtung 7 mit dem Produktverbund 5, 6 in vertikale Schwingungen versetzt. Aufgrund der Vibration des Produktverbunds 5, 6 brechen die zwischen den Einzelteilen des Produktverbunds 5, 6 verbliebenen Nanojoints 4, und die Blechteile 2 werden aus dem mittels der Haltevorrichtung 7 fixierten Produktverbund 5, 6 gelöst. Die aus dem Produktverbund 5, 6 gelösten Blechteile 2 fallen unter Schwerkraftwirkung auf eine horizontale Ablagefläche 14 einer unterhalb der Haltevorrichtung 7 angeordneten Produktablage. Als Produktablage ist in den Figu-ren 1 bis 3 ein Palettenwagen 15 herkömmlicher Bauart vorgesehen.

Zur Lagerung der Haltevorrichtung 7 weist die maschinelle Vorrichtung 1 eine Tragstruktur 16 auf.

In vertikaler Richtung zwischen der Tragstruktur 16 und der Haltevorrichtung 7 sind Abstandhalter angeordnet, die in dem dargestellten Beispielsfall als Druckluftbälge 17 ausgebildet sind und mittels derer die Haltevorrichtung 7 in vertikaler Richtung wirksam an der Tragstruktur 16 gelagert ist. Die Druckluftbälge 17 sind parallel zu der Hauptebene 10 des mittels der Haltevorrichtung 7 fixierten Produktverbunds 5, 6 gegeneinander versetzt.

Die Druckluftbälge 17 sind in der vertikalen Richtung federelastisch und fungieren zum einen während der zum Lösen der Blechteile 2 aus dem Produktverbund 5, 6 mittels des Schwingungserzeugers 12 erzeugten vertikalen Vibration der Haltevorrichtung 7 als Feder-Dämpfer-Vorrichtungen zur Schwingungsisolierung der Tragstruktur 16 gegenüber der Haltevorrichtung 7. Durch die Druckluftbälge 17 wird eine Übertragung der vertikalen Schwingungen der Haltevorrichtung 7 auf die Tragstruktur 16 weitestgehend verhindert. Die Schwingungsisolierung der Tragstruktur 16 ist insofern von großer Bedeutung als die Tragstruktur 16 als Komponente einer übergeordneten Automatisierungseinheit der Laser-Schneidmaschine mit weiteren Komponenten der Automatisierungseinheit verbunden ist.

Darüber hinaus sind die Druckluftbälge 17 Bauteile einer Horizontierungsvorrichtung 18 der maschinellen Vorrichtung 1, im Einzelnen einer Justiervorrichtung 19 der Horizontierungsvorrichtung 18.

Zusätzlich zu den Druckluftbälgen 17 umfasst die Justiervorrichtung 19 der Horizontierungsvorrichtung 18 eine an die Druckluftbälge 17 angeschlossene Stellvorrichtung 20. Die Stellvorrichtung 20 für die Druckluftbälge 17 weist einen mit einer Druckregelung 21 versehenen Kompressor 22 auf. Durch Beaufschlagung der Druckluftbälge 17 mit einem entsprechenden Luftdruck können die vertikalen Abmessungen der Druckluftbälge 17 unabhängig voneinander eingestellt werden.

Die Stellvorrichtung 20 der Justiervorrichtung 19 wird durch eine Auswerteeinheit 23 einer Prüfvorrichtung 24 angesteuert. Gemeinsam mit der Justiervorrichtung 19 bildet die Prüfvorrichtung 24 die Horizontierungsvorrichtung 18 der maschinellen Vorrichtung 1.

Neben der Auswerteeinheit 23 umfasst die Prüfvorrichtung 24 Abstandsmessvorrichtungen, in dem dargestellten Beispielsfall Abstandsmesssensoren 25, die mit der Auswerteeinheit 23 verbunden sind.

Vor dem Einschalten des Schwingungserzeugers 12 messen die Abstandsmesssensoren 25 an mindestens zwei, vorzugsweise an drei voneinander beabstandeten Stellen den vertikalen Abstand der Haltevorrichtung 7 von einer horizontal ausgerichteten Lagerungsebene 26 der Tragstruktur 16. Die mittels der Abstandsmesssensoren 25 gewonnenen Messwerte werden in der Auswerteeinheit 23 der Prüfvorrichtung 24 ausgewertet. Ergibt die Auswertung der Messwerte, dass die Haltevorrichtung 7 nicht parallel zu der Lagerungsebene 26 der Tragstruktur 16 und somit nicht horizontal ausgerichtet ist, so bewirkt die Auswerteeinheit 23 der Prüfvorrichtung 24 durch Ansteuerung der Stellvorrichtung 20 der Justiervorrichtung 19, dass durch entsprechende Druckbeaufschlagung der Druckluftbälge 17 die vertikalen Abmessungen der Druckluftbälge 17 derart eingestellt werden, dass die bestehende Abweichung der Ausrichtung der Haltevorrichtung 7 von der horizontalen Ausrichtung beseitigt wird. Mit der Haltevorrichtung 7 wird auch der an der Haltevorrichtung 7 fixierte Produktverbund 5, 6 horizontal ausgerichtet.

Aufgrund der horizontalen Ausrichtung des Produktverbunds 5, 6 sind auch die aus dem Produktverbund 5, 6 zu lösenden Blechteile 2 horizontal und somit ebenso ausgerichtet wie die Ablagefläche 14 des Palettenwagens 15.

Anstelle der Druckluftbälge 17 können als Abstandhalter zwischen der Haltevorrichtung 7 und der Tragstruktur 16 Federelemente vorgesehen sein, deren vertikale Abmessung durch Einstellung der Federhärte variiert werden kann.

Nach dem Einschalten des Schwingungserzeugers 12 behalten die aus dem Produktverbund 5, 6 gelösten Blechteile 2 ihre Ausrichtung parallel zu der Ablagefläche 14 bis zur Ablage auf dem Palettenwagen 15 im Wesentlichen bei. Bei ihrem Auftreffen auf der Ablagefläche 14 sind die Blechteile 2 allenfalls geringfügig gegen die Ablagefläche 14 geneigt. Dadurch werden die Blechteile 2 geordnet und schonend auf der Ablagefläche 14 des Palettenwagens 15 abgelegt.

In Figur 1 ist die maschinelle Anordnung 1 mit einer horizontalen Soll-Ausrichtung der Haltevorrichtung 7 und des daran fixierten Produktverbunds 5 dargestellt.

Figur 2 zeigt die Verhältnisse unmittelbar nach einer durch die Abmessungen des Produktverbunds 6 bedingten Verstellung der Positionen der Greifer 9 der Haltevorrichtung 7. Aufgrund der außermittigen Anordnung des Produktverbunds 6 werden die Druckluftbälge 17 der Justiervorrichtung 19 durch die Haltevorrichtung 7 und den daran fixierten Produktverbund 6 uneinheitlich belastet. Infolgedessen kommt es zu einer Schräglage der Haltevorrichtung 7 und des Produktverbunds 6.

In Figur 3 wurde die in Figur 2 bestehende Schräglage der Haltevorrichtung 7 und des Produktverbunds 6 durch die Horizontierungsvorrichtung 18 in der vorstehend beschriebenen Weise korrigiert.

## Patentansprüche

1. Maschinelle Vorrichtung zum Separieren eines als Bearbeitungsprodukt einer trennenden Bearbeitung eines plattenartigen Werkstücks, insbesondere eines Blechs, vorliegenden Werkstückteils (2) von einem als weiteres Bearbeitungsprodukt der trennenden Werkstückbearbeitung vorliegenden Restgitter (3) unter Schwerkraftwirkung aus einem Produktverbund (5, 6) des Restgitters (3) und des Werkstückteils (2),
• wobei die maschinelle Vorrichtung eine Haltevorrichtung (7), eine Sepa-riereinheit (13) und eine Produktablage (15) aufweist,
• wobei die Haltevorrichtung (7) ausgebildet ist zum in der Schwerkraftrichtung wirksamen Fixieren des Produktverbunds (5, 6) vor dem Separieren des Werkstückteils (2) und zum in der Schwerkraftrichtung wirksamen Fixieren des Restgitters (3) nach dem Separieren des Werkstückteils (2),
• wobei die Separiereinheit (13) ausgebildet ist zum Lösen des Werkstückteils (2) aus dem mittels der Haltevorrichtung (7) fixierten Produktverbund (5, 6),
• wobei die Produktablage (15) mit einem vertikalen Abstand unterhalb des mittels der Haltevorrichtung (7) fixierten Produktverbunds (5, 6) angeordnet ist und
• wobei die Produktablage (15) zur Ablage des aus dem Produktverbund (5, 6) gelösten Werkstückteils (2) unter Schwerkraftwirkung eine horizontale Ablagefläche (14) aufweist, die sich entlang des mittels der Haltevorrichtung (7) fixierten Produktverbunds (5, 6) erstreckt,
**dadurch gekennzeichnet, dass**
eine Horizontierungsvorrichtung (18) vorgesehen ist, mittels derer vor dem Lösen des Werkstückteils (2) aus dem mittels der Haltevorrichtung (7) fixierten Produktverbund (5, 6) der mittels der Haltevorrichtung (7) fixierte Produktverbund (5, 6) mit einer Hauptebene (10) des Produktverbunds (5, 6) parallel zu der horizontalen Ablagefläche (14) der Produktablage (15) ausrichtbar ist.

2. Maschinelle Vorrichtung nach Anspruch 1, **dadurch gekennzeichnet,**
• **dass** die Horizontierungsvorrichtung (18) eine Prüfvorrichtung (24) und eine Justiervorrichtung (19) aufweist,
• **dass** mittels der Prüfvorrichtung (24) die Ausrichtung der Hauptebene (10) des mittels der Haltevorrichtung (7) fixierten Produktverbunds (5, 6) gegenüber einer horizontalen Bezugsebene bestimmbar ist und
• **dass** im Falle einer Abweichung der bestimmten Ausrichtung der Hauptebene (10) des mittels der Haltevorrichtung (7) fixierten Produktverbunds (5, 6) von der Ausrichtung der horizontalen Bezugsebene die Ausrichtung des mittels der Haltevorrichtung (7) fixierten Produktverbunds (5, 6) mittels der Justiervorrichtung (19) derart justierbar ist, dass sich der mittels der Haltevorrichtung (7) fixierte Produktverbund (5, 6) mit der Hauptebene (10) parallel zu der horizontalen Bezugsebene erstreckt.

3. Maschinelle Vorrichtung nach Anspruch 2, **dadurch gekennzeichnet,**
• **dass** die Ausrichtung der Hauptebene (10) des mittels der Haltevorrichtung (7) fixierten Produktverbunds (5, 6) gegenüber der horizontalen Bezugsebene durch die Ausrichtung der Haltevorrichtung (7) gegenüber der horizontalen Bezugsebene bestimmt ist,
• **dass** mittels der Prüfvorrichtung (24) die Ausrichtung der Haltevorrichtung (7) gegenüber der horizontalen Bezugsebene bestimmbar ist und
• **dass** im Falle einer Abweichung der bestimmten Ausrichtung der Haltevorrichtung (7) von der Ausrichtung der horizontalen Bezugsebene die Ausrichtung der Haltevorrichtung (7) mittels der Justiervorrichtung (19) derart justierbar ist, dass sich die Haltevorrichtung (7) parallel zu der horizontalen Bezugsebene erstreckt.

4. Maschinelle Vorrichtung nach Anspruch 3, **dadurch gekennzeichnet,**
• **dass** für die Haltevorrichtung (7) eine Tragstruktur (16) vorgesehen ist,
• **dass** die Justiervorrichtung (19) wenigstens einen in vertikaler Richtung zwischen der Tragstruktur (16) und der Haltevorrichtung (7) vorgesehenen Abstandhalter (17) und eine Stellvorrichtung (20) für den Abstandhalter (17) aufweist, wobei die Haltevorrichtung (7) mittels des Abstandhalters (17) in vertikaler Richtung wirksam an der Tragstruktur (16) gelagert ist und wobei eine vertikale Abmessung des Abstandhalters (17) mittels der Stellvorrichtung (20) einstellbar ist und
• **dass** im Falle einer Abweichung der bestimmten Ausrichtung der Haltevorrichtung (7) von der Ausrichtung der horizontalen Bezugsebene die vertikale Abmessung des Abstandhalters (17) zwischen der Tragstruktur (16) und der Haltevorrichtung (7) mittels der Stellvorrichtung (20) derart einstellbar ist, dass sich die Haltevorrichtung (7) parallel zu der horizontalen Bezugsebene erstreckt.

5. Maschinelle Vorrichtung nach Anspruch 4, **dadurch gekennzeichnet,**
• **dass** die Justiervorrichtung (19) mehrere in vertikaler Richtung zwischen der Tragstruktur (16) und der Haltevorrichtung (7) vorgesehene und parallel zu der Hauptebene (10) des mittels der Haltevorrichtung (7) fixierten Produktverbunds (5, 6) gegeneinander versetzte Abstandhalter (17) mit einstellbarer vertikaler Abmessung aufweist und
• **dass** im Falle einer Abweichung der bestimmten Ausrichtung der Haltevorrichtung (7) von der Ausrichtung der horizontalen Bezugsebene die vertikalen Abmessungen der Abstandhalter (17) zwischen der Tragstruktur (16) und der Haltevorrichtung (7) mittels der Stellvorrichtung (20) derart aufeinander abgestimmt einstellbar sind, dass sich die Haltevorrichtung (7) parallel zu der horizontalen Bezugsebene erstreckt.

6. Maschinelle Vorrichtung nach Anspruch 4 oder Anspruch 5, **dadurch gekennzeichnet,**
• **dass** die Tragstruktur (16) für die Haltevorrichtung (7) mit einer Lagerungsebene (26) der Tragstruktur (16) horizontal ausgerichtet ist, in welcher die Haltevorrichtung (7) mittels des oder der Abstandhalter (17) in vertikaler Richtung wirksam an der Tragstruktur (16) gelagert ist,
• **dass** mittels der Prüfvorrichtung (24) der Horizontierungsvorrichtung (18) die Ausrichtung der Haltevorrichtung (7) gegenüber der Lagerungsebene (26) der Tragstruktur (16) bestimmbar ist und
• **dass** im Falle einer Abweichung der bestimmten Ausrichtung der Haltevorrichtung (7) von der Ausrichtung der Lagerungsebene (26) der Tragstruktur (16) die Ausrichtung der Haltevorrichtung (7) mittels der Justiervorrichtung (19) derart justierbar ist, dass sich die Haltevorrichtung (7) parallel zu der Lagerungsebene (26) der Tragstruktur (16) erstreckt.

7. Maschinelle Vorrichtung nach einem der Ansprüche 4 bis 6, **dadurch gekennzeichnet,**
• **dass** wenigstens ein Abstandhalter (17) als Druckluftbalg ausgebildet ist und
• **dass** zur Einstellung der vertikalen Abmessung des Druckluftbalgs der Innendruck des Druckluftbalgs mittels der Stellvorrichtung (20) einstellbar ist.

8. Maschinelle Vorrichtung nach einem der Ansprüche 4 bis 7, **dadurch gekennzeichnet,**
• **dass** wenigstens ein Abstandhalter (17) als Federelement ausgebildet ist und
• **dass** zur Einstellung der vertikalen Abmessung des Federelements die Federhärte des Federelements mittels der Stellvorrichtung (20) einstellbar ist.

9. Maschinelle Vorrichtung nach einem der Ansprüche 4 bis 8, **dadurch gekennzeichnet,**
• **dass** die Separiereinheit (13) einen Schwingungserzeuger (12) aufweist, der ausgebildet ist zur Erzeugung von vertikalen Schwingungen der den Produktverbund (5, 6) fixierenden Haltevorrichtung (7), welche das Lösen des Werkstückteils (2) aus dem Produktverbund (5, 6) bewirken,
• **dass** zur Schwingungsisolierung der Haltevorrichtung (7) zwischen der Haltevorrichtung (7) und der Tragstruktur (16) wenigstens eine in vertikaler Richtung elastische Feder-Dämpfer-Vorrichtung vorgesehen ist, über welche die Haltevorrichtung (7) in vertikaler Richtung schwingungsfähig an der Tragstruktur (16) gelagert ist und
• **dass** die Feder-Dämpfer-Vorrichtung einen zwischen der Haltevorrichtung (7) und der Tragstruktur (16) vorgesehenen Abstandhalter (17) ausbildet und die vertikale Abmessung der Feder-Dämpfer-Vorrichtung mittels der Stellvorrichtung (20) der Justiervorrichtung (19) einstellbar ist.

10. Maschinelle Vorrichtung nach Anspruch 9 und Anspruch 7, **dadurch gekennzeichnet, dass** wenigstens ein Druckluftbalg als Feder-Dämpfer-Vorrichtung zwischen der Haltevorrichtung (7) und der Tragstruktur (16) vorgesehen ist.

11. Maschinelle Vorrichtung nach Anspruch 9 oder Anspruch 10 und nach Anspruch 8, **dadurch gekennzeichnet, dass** wenigstens ein Federelement als Feder-Dämpfer-Vorrichtung zwischen der Haltevorrichtung (7) und der Trag-struktur (16) vorgesehen ist.

12. Maschinelle Vorrichtung nach einem der vorhergehenden Ansprüche, **dadurch gekennzeichnet,**
• **dass** die Haltevorrichtung (7) Halteorgane (9) und eine Basisstruktur (8) aufweist, an welcher die Halteorgane (9) angebracht sind und an welcher die Halteorgane (9) mit einem gegenseitigen horizontalen Abstand parallel zu der Hauptebene (10) des an der Haltevorrichtung (7) fixierten Produktverbunds (5, 6) einander gegenüberliegen,
• **dass** der Produktverbund (5, 6) an den Halteorganen (9) in der Schwerkraftrichtung wirksam an der Haltevorrichtung (7) fixierbar ist und
• **dass** wenigstens eines der Halteorgane (9) parallel zu der Hauptebene (10) des an der Haltevorrichtung (7) fixierten Produktverbunds (5, 6) relativ zu der Basisstruktur (8) zustellbar ist.
